# FASCICULE DE BREVET EUROPEEN

(11) **EP 3 877 160 B1**
(45) Date de publication et mention de la délivrance du brevet: **25.01.2023**
(21) Numéro de dépôt: 19839371.2
(22) Date de dépôt: 10.12.2019
(51) Int. Cl.: B29C 70/44, B29C 70/54, B29C 33/00, B29C 43/20, B29C 70/34, B29C 70/38, B29C 43/32, B29C 43/36, B29L 31/30, B29L 31/00

(54) **MOULE DE CUISSON POUR FABRIQUER UNE PIECE DE TURBOMACHINE EN MATERIAU COMPOSITE A PARTIR D'UNE PREFORME ET PROCEDE DE FABRICATION D'UNE PIECE AU MOYEN D'UN TEL MOULE**
AUSHÄRTFORM ZUR HERSTELLUNG EINER AUS VERBUNDSTOFFMATERIAL AUS EINER VORFORM GEFERTIGTEN TURBOMASCHINENKOMPONENTE UND VERFAHREN ZUR HERSTELLUNG EINER KOMPONENTE MITTELS SOLCH EINER FORM
CURING MOLD FOR MANUFACTURING A TURBOMACHINE COMPONENT MADE OF COMPOSITE MATERIAL FROM A PREFORM AND METHOD FOR PRODUCING A COMPONENT BY MEANS OF SUCH A MOLD

(30) Priorité: 14.12.2018 FR 1872925
(43) Date de publication de la demande: 15.09.2021
(73) Titulaire: SAFRAN, 75015 Paris (FR)
(72) Inventeur: OLHAGARAY, Jérôme, 77550 MOISSY-CRAMAYEL (FR); CHAUVIN, Thierry, 77550 MOISSY-CRAMAYEL (FR); WLASOW WLASOWSKI, Michel, 77550 MOISSY-CRAMAYEL (FR); HOES, Kris, 77550 MOISSY-CRAMAYEL (FR)
(74) Mandataire: Brevalex
(86) Numéro de dépôt international: PCT/FR2019/053001
(87) Numéro de publication internationale: WO 2020/120895

(56) Documents cités:
- WO-A1-2018/146428
- DE-A1-102016 211 255
- FR-A1- 3 059 266

## Description

### DOMAINE TECHNIQUE

L'invention concerne un moule de cuisson pour fabriquer une pièce de turbomachine en matériau composite, à partir d'une préforme, et un procédé de fabrication d'une pièce de turbomachine en matériau composite au moyen d'un tel moule de cuisson.

### ÉTAT DE LA TECHNIQUE ANTÉRIEURE

Il existe plusieurs procédés connus pour la fabrication de pièce de turbomachine en matériau composite.

Il est par exemple connu de réaliser une préforme de la pièce de turbomachine par drapage à partir de pré-imprégnés, puis de cuire cette préforme afin d'obtenir la pièce de turbomachine.

Il est entendu ici par « pré-imprégné », un produit semi-fini comprenant des fibres de renfort et une résine (matrice) thermodurcissable dans laquelle les fibres de renfort sont imprégnées. De tels pré-imprégnés sont généralement conditionnés sous forme de rouleaux de nappes de fibres, unidirectionnelles et continues, imprégnées par la résine thermodurcissable.

Le drapage des pré-imprégnés est par exemple réalisé par placement automatisé de fibres, aussi appelé « AFP » pour « Automated Fiber Placement » en terminologie anglo-saxonne, qui est une technique de drapage particulièrement adaptée pour les pièces de turbomachine à géométrie complexe, notamment présentant une double courbure.

Pour cela, une tête robotisée de placement de fibres coupe des bandelettes à partir d'une nappe de pré-imprégnés, puis dépose ces bandelettes sur la surface d'un moule de cuisson de forme complémentaire avec une surface de la pièce de turbomachine à fabriquer. Plusieurs bandelettes de pré-imprégnés peuvent être empilées les unes sur les autres, notamment avec des orientations différentes de fibres de renfort, les fibres de renfort restant toutefois perpendiculaires à la direction d'empilement des pré-i m prégnés.

La préforme ainsi réalisée est ensuite positionnée sur la surface d'un moule de cuisson de forme complémentaire avec une surface de la pièce de turbomachine à fabriquer, puis elle est recouverte d'une membrane et placée dans un autoclave où la membrane est mise sous vide. Dans l'autoclave, la préforme est cuite dans des conditions contrôlées de température et de pression, de sorte à polymériser la résine et donc à consolider la préforme, et ainsi obtenir la pièce de turbomachine.

Il est généralement reconnu que la cuisson de la préforme en autoclave, du fait des conditions contrôlées de température et de pression, permet d'obtenir des pièces de turbomachine en matériau composite de hautes performances mécaniques.

Toutefois, lorsque la pièce de turbomachine à fabriquer n'autorise que des intervalles de tolérances serrés pour leur géométrie, comme cela est par exemple le cas des carters externes de compresseur basse pression pour turbomachine à double flux, la cuisson en autoclave de la préforme ne peut pas être utilisée, la membrane sous vide et la pression à l'intérieur de l'autoclave ne permettant pas de respecter de tels intervalles de tolérances pour la géométrie de la pièce de turbomachine à fabriquer.

En variante, après le drapage des pré-imprégnés, la préforme peut par exemple être moulée par transfert de même résine qualifiée. Cette technique de moulage est connue sous l'acronyme « SQRTM » correspondant à « Same Qualified Resin Transfer Molding » en terminologie anglo-saxonne.

Cette technique de moulage met en oeuvre un moule de cuisson comprenant un premier et une deuxième corps dont des surfaces internes définissent ensemble un entrefer fixe de forme complémentaire avec la pièce de turbomachine à fabriquer, un organe de mise sous vide de l'entrefer, ainsi qu'un piston d'injection de résine dans des canaux qui sont réalisés dans les premier et deuxième corps et qui communiquent avec l'entrefer.

Lors du moulage de la préforme, cette dernière est placée dans l'entrefer du moule de cuisson, entre les premier et deuxième corps, de sorte à laisser, dans l'entrefer, des espaces vides le long des bords libres de la préforme avec lesquelles communiquent les canaux. Les premier et deuxième corps sont ensuite serrés l'un contre l'autre, par exemple au moyen d'une presse, puis l'entrefer est mis sous vide. Le moule de cuisson est chauffé, par exemple au moyen de la presse, tandis que de la résine, identique à celle des pré-imprégnés formant la préforme, est injectée dans les canaux, de sorte à remplir de résine les espaces vides dans l'entrefer situés le long des bords libres de la préforme et ainsi mettre la préforme sous pression hydrostatique dans l'entrefer. Cette pression hydrostatique est maintenue pendant la cuisson de la préforme, qui est ainsi réalisée dans des conditions contrôlées de température et de pression.

Le SQRTM permet ainsi non seulement d'obtenir des pièces de turbomachine de hautes performances mécaniques, du fait de la cuisson de la préforme dans des conditions contrôlées de température et de pression, mais aussi de tenir des intervalles de tolérances serrés pour leur géométrie grâce au moule de cuisson à entrefer fixe. Le fait d'utiliser de la résine identique à celle des pré-imprégnés formant la préforme autorise en outre la mise en oeuvre du SQRTM dans le domaine de l'aéronautique, sans qu'il soit nécessaire d'obtenir une nouvelle qualification pour la résine.

Toutefois, le SQRTM présente l'inconvénient de nécessiter un apport supplémentaire de résine pour mettre la préforme sous pression hydrostatique dans l'entrefer, sans que cette résine supplémentaire ne soit conservée une fois la pièce de turbomachine fabriquée, le bord de la préforme étant retiré après démoulage. Il s'agit donc d'une perte de consommable, générant un surcoût non négligeable pour la fabrication des pièces de turbomachine.

DE102016211255A1 divulgue un moule de cuisson pour fabriquer une pièce de turbomachine en matériau composite, à partir d'une préforme réalisée par drapage de pré-imprégnés comprenant des fibres de renfort imprégnés dans une résine thermodurcissable.

### EXPOSÉ DE L'INVENTION

La présente invention a pour but de pallier les inconvénients ci-dessus mentionnés, notamment en proposant un moule de cuisson pour fabriquer une pièce de turbomachine, en matériau composite, à partir d'une préforme réalisée par drapage de pré-imprégnés, comprenant un entrefer accueillant la préforme et un ou plusieurs pistons conçus pour comprimer de la résine de la préforme qui s'est introduit dans une chambre du ou des pistons depuis l'entrefer, et ainsi mettre la préforme sous pression hydrostatique.

Plus précisément, l'invention a pour objet un moule de cuisson pour fabriquer une pièce de turbomachine en matériau composite, à partir d'une préforme réalisée par drapage de pré-imprégnés comprenant des fibres de renfort imprégnés dans une résine thermodurcissable, le moule de cuisson comprenant :
- un premier corps et un deuxième corps conçus pour être rapportés l'un sur l'autre, le premier et le deuxième corps comprenant chacun une surface interne comprenant elle-même une zone périphérique au niveau de laquelle le premier et le deuxième corps sont en contact l'un avec l'autre et une zone centrale définissant un entrefer fixe entre les premier et deuxième corps, l'entrefer étant de forme complémentaire avec la pièce de turbomachine à fabriquer et destiné à recevoir la préforme ;
- un organe de chauffage conçu pour chauffer la préforme dans l'entrefer à une première température, de sorte à diminuer la viscosité de la résine ;
- au moins un canal primaire ménagé dans le premier et/ou le deuxième corps ;
- un organe d'injection d'un fluide conçu pour injecter du fluide sous pression dans le ou les canaux primaires ;
- au moins un canal secondaire ménagé dans le premier et/ou le deuxième corps, le ou chacun des canaux secondaires recevant un piston monté coulissant à l'intérieur dudit canal secondaire suivant un axe de coulissement et délimitant d'une part une première chambre en communication avec le ou un canal primaire, et d'autre part une deuxième chambre en communication avec l'entrefer, le piston du ou de chacun des canaux secondaires étant en outre conçu pour comprimer de la résine dans la deuxième chambre dudit canal secondaire depuis la préforme dans l'entrefer, de sorte à mettre la préforme sous pression hydrostatique, lorsque la préforme est reçue dans l'entrefer, que l'organe de chauffage chauffe la préforme à la première température et que l'organe d'injection injecte du fluide sous pression dans le ou les canaux primaires jusqu'à la première chambre dudit canal secondaire.

Selon des variantes de réalisation qui peuvent être prises ensemble ou séparément :
- l'organe de chauffage est conçu pour chauffer la préforme à une deuxième température, strictement supérieure à la première température, de sorte à cuire la préforme, lorsque ladite préforme est reçue dans l'entrefer;
- le piston du ou de chacun des canaux secondaires est conçu pour poursuivre la compression exercée sur la résine dans la deuxième chambre dudit canal secondaire, lorsque la préforme est reçue dans l'entrefer, que l'organe de chauffage chauffe la préforme à la deuxième température et que l'organe d'injection injecte du fluide sous pression dans le ou les canaux primaires jusqu'à la première chambre dudit canal secondaire ;
- la deuxième chambre du ou de chacun des canaux secondaires communique avec l'entrefer par l'intermédiaire d'une buse présentant une section transversale, prise perpendiculairement à l'axe de coulissement du piston dudit canal secondaire, inférieure à celle de ladite deuxième chambre ;
- les fibres de renfort de la préforme sont orientés perpendiculairement par rapport à une direction d'empilement ;
- l'axe de coulissement du piston du ou de chacun des canaux secondaires est confondu avec la direction d'empilement d'une portion de la préforme située en regard dudit canal secondaire.

L'invention a encore pour objet un procédé de fabrication d'une pièce de turbomachine en matériau composite, au moyen du moule de cuisson tel que précédemment décrit, à partir d'une préforme réalisée par drapage de pré-imprégnés comprenant des fibres de renfort imprégnés dans une résine thermodurcissable, le procédé comprenant les étapes de :
- mise en place de la préforme dans l'entrefer, entre les premier et deuxième corps du moule de cuisson ;
- chauffage de la préforme à la première température, de la résine provenant de la préforme s'introduisant la deuxième chambre de la ou des canaux secondaires ;
- injection du fluide sous pression dans le ou dans chacun des canaux primaires jusqu'à la première chambre du ou de chacun des canaux secondaires, de sorte que le piston du ou de chacun des canaux secondaires comprime la résine dans la deuxième chambre dudit canal secondaire depuis la préforme dans l'entrefer, la préforme étant maintenue à la première température.

Selon des variantes de réalisation qui peuvent être prises ensemble ou séparément :
- la préforme est mise sous une pression hydrostatique comprise entre 3 et 10 bar inclus, notamment entre 3 et 7 bar inclus, lors de l'étape d'injection du fluide sous pression dans le ou dans chacun des canaux primaires ;
- le procédé comprend une étape ultérieure de chauffage de la préforme à la deuxième température, de sorte à cuire la préforme, la compression appliquée par le ou chacun des pistons dans le ou les canaux secondaires sur la résine dans la deuxième chambre dudit canal secondaire étant poursuivie, la résine cuite dans la ou chacune des deuxièmes chambres formant une carotte ;
- le procédé comprend une étape ultérieure de démoulage de la préforme ainsi cuite, la ou les carottes de résine cuite dans la deuxième chambre du ou des canaux secondaires étant cassées, de sorte à obtenir la pièce de turbomachine.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
- la figure 1 est une vue en coupe, schématique, d'un moule de cuisson pour fabriquer une pièce de turbomachine en matériau composite, à partir d'une préforme, selon un mode de réalisation de l'invention, le moule de cuisson étant représenté sans la préforme ;
- la figure 2 est une vue en coupe du moule de cuisson illustré à la figure 1, la préforme étant reçue dans le moule de cuisson ;
- la figure 3 est un ordinogramme d'un procédé de fabrication d'une pièce de turbomachine en matériau composite, au moyen du moule de cuisson illustré aux figures 1 et 2 ;
- la figure 4 est une vue en perspective d'un exemple de pièce de turbomachine obtenu par la mise en oeuvre du procédé de fabrication illustré à la figure 3 ;
- la figure 5 est une vue en perspective d'un autre exemple de pièce de turbomachine obtenu par la mise en oeuvre du procédé de fabrication illustré à la figure 3 ;
- la figure 6 est une vue en coupe longitudinale, schématique, d'une turbomachine d'aéronef comprenant la pièce de turbomachine illustrée à la figure 4.

### DESCRIPTION DETAILLEE

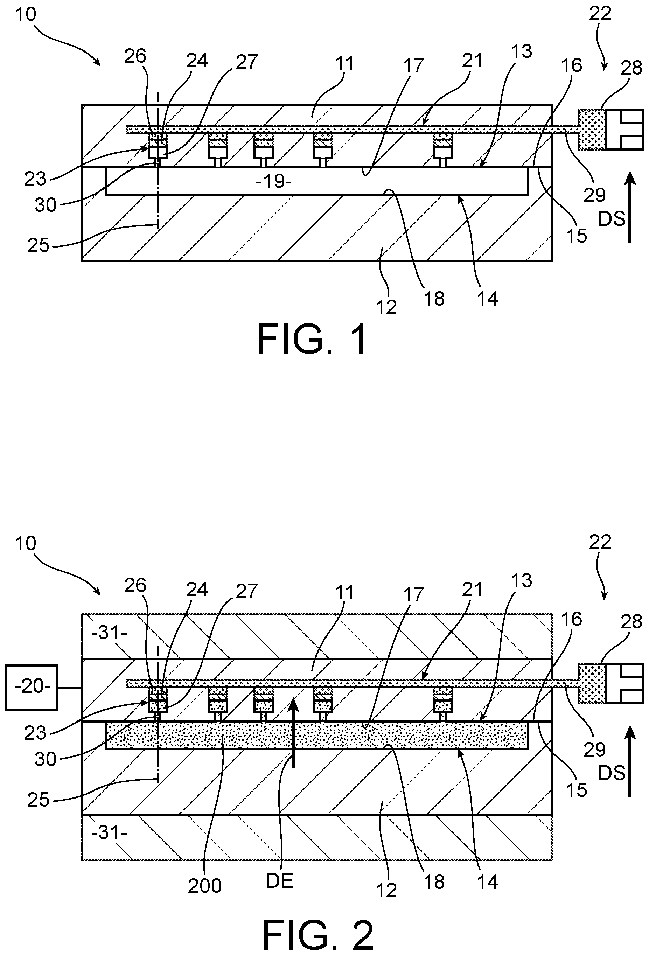

Les figures 1 et 2 montrent un moule de cuisson 10 pour fabriquer une pièce de turbomachine en matériau composite, à partir d'une préforme 200, selon un mode de réalisation de l'invention.

La préforme 200 est réalisée par drapage de pré-imprégnés comprenant des fibres de renfort imprégnés dans une résine thermodurcissable. La préforme 200 comprend un surplus de résine par rapport à la quantité de résine thermodurcissable de la pièce de turbomachine à fabriquer.

La préforme 200 est par exemple réalisée par drapage de pré-imprégnés comprenant des fibres de carbone unidirectionnelles imprégnées dans une résine thermodurcissable époxyde. Ces pré-imprégnés comprennent par exemple 34% en masse de résine thermodurcissable époxyde. Dans la suite de la description, les valeurs fournies sont notamment adaptées à une préforme 200 réalisée par drapage de tels pré-imprégnés.

La préforme 200 est par exemple réalisée par drapage par placement automatisé de fibres, aussi appelé « AFP » qui est l'acronyme d'« Automated Fiber Placement » en terminologie anglo-saxonne. La préforme 200 peut en variante être réalisée par drapage manuel ou automatisé par pose de bande, aussi appelé « ATL » qui est l'acronyme d'« Automated Tape Laying » en terminologie anglo-saxonne. Ces techniques de drapage sont bien connues de l'homme du métier.

Les fibres de renfort de la préforme 200 sont orientées perpendiculairement par rapport à une direction d'empilement DE qui définit une épaisseur de la préforme 200. Les fibres de renfort sont ainsi empilées suivant la direction d'empilement DE. On comprendra qu'en fonction de la géométrie de la préforme 200, notamment de sa ou de ses courbures, la direction d'empilement DE des fibres de renfort de la préforme 200 peut présenter une orientation qui varie d'une zone à l'autre de la préforme 200.

Dans l'exemple illustré aux figures 1 et 2, la préforme 200 présente par exemple la forme d'une plaque rectangulaire. En variante (non représentée), la préforme 200 présente la forme d'une coque.

Le moule de cuisson 10 comprend un premier corps 11 et un deuxième corps 12 conçus pour être rapportés l'un sur l'autre. Le premier et le deuxième corps 11, 12 comprennent chacun une surface interne 13, 14 comprenant elle-même une zone périphérique 15, 16 au niveau de laquelle le premier et le deuxième corps 11, 12 sont en contact l'un avec l'autre suivant une direction de serrage DS, par exemple verticale, et une zone centrale 17, 18. Les zones centrales 17, 18 de la surface interne 13, 14 des premier et deuxième corps 11, 12 définissent ou encore délimitent ensemble un entrefer 19 fixe qui est de forme complémentaire avec la pièce de turbomachine à fabriquer et qui est destiné à recevoir la préforme 200 (figure 1).

Le moule de cuisson 10 comprend en outre un organe de chauffage 20 conçu pour chauffer la préforme 200 dans l'entrefer 19 à une première température, de sorte à diminuer la viscosité de la résine (figure 2). Cela permet par exemple à la résine de la préforme 200 de se répartir de manière homogène dans l'entrefer 19 du moule de cuisson 10.

La première température est par exemple comprise entre 80 et 110°C inclus. La première température est par exemple maintenue pendant une durée comprise entre 30 et 60min inclus. Cette durée correspond notamment à un palier d'homogénéisation de la température du moule de cuisson 10.

Le moule de cuisson 10 comprend encore au moins un canal primaire 21 ménagé dans le premier et/ou le deuxième corps 11, 12, un organe d'injection 22 d'un fluide conçu pour injecter du fluide sous pression dans le ou chacun des canaux primaires 21, ainsi qu'au moins un canal secondaire 23 ménagé dans le premier et/ou le deuxième corps 11, 12.

Le ou chacun des canaux secondaires 23 reçoit un piston 24 monté coulissant à l'intérieur dudit canal secondaire 23 suivant un axe de coulissement 25 et délimitant d'une part une première chambre 26 en communication avec le ou l'un des canaux primaires 21, et d'autre part une deuxième chambre 27 en communication avec l'entrefer 19.

Le piston 24 du ou de chacun des canaux secondaires 23 est en outre conçu pour comprimer de la résine qui s'est introduit dans la deuxième chambre 27 dudit canal secondaire 23 depuis la préforme 200 dans l'entrefer 19, de sorte à mettre la préforme 200 sous pression hydrostatique, lorsque la préforme 200 est reçue dans l'entrefer 19, que l'organe de chauffage 20 chauffe la préforme 200 à la première température et que l'organe d'injection 22 injecte du fluide sous pression dans le ou les canaux primaires 21 jusqu'à la première chambre 26 dudit canal secondaire 23. La préforme 200 est par exemple mise sous une pression hydrostatique comprise entre 3 et 10 bar inclus, de préférence entre 3 et 7 bar inclus.

Il est entendu par « fluide sous pression » que le fluide injecté dans la première chambre 26 du ou des canaux secondaires 23, via le ou les canaux primaires 21, est à une pression telle que le piston 24 dudit canal secondaire 23 comprime la résine de la deuxième chambre 27 dudit canal secondaire 23.

Ainsi, le moule de cuisson 10 se sert de la résine en surplus dans la préforme 200 par rapport à la quantité de résine dans la pièce de turbomachine à fabriquer pour mettre sous pression hydrostatique la préforme 200. Cette résine en surplus étant de toute façon prévue lors de la réalisation de la préforme 200, il n'y a donc pas de perte de résine au-delà de celle déjà contenue dans la préforme 200. Le moule de cuisson 10 permet ainsi d'éviter un surcoût non négligeable qui serait lié à un apport supplémentaire de résine pour mettre la préforme 200 sous pression hydrostatique.

L'organe de chauffage 20 est par exemple aussi conçu pour chauffer la préforme 200 à une deuxième température, strictement supérieure à la première température, de sorte à cuire la préforme 200, lorsque ladite préforme 200 est reçue dans l'entrefer 19. La cuisson de la préforme 200 permet de polymériser la résine de la préforme 200 et donc de la consolider, afin d'obtenir la pièce de turbomachine. La deuxième température correspond notamment à une température de polymérisation de la résine de la préforme 200. La deuxième température est par exemple comprise entre 170 et 190°C inclus, notamment égale à 180°C. La deuxième température est par exemple maintenue pendant une durée égale à 2h.

Le piston 24 du ou de chacun des canaux secondaires 23 peut alors être conçu pour poursuivre la compression exercée sur la résine dans la deuxième chambre 27 dudit canal secondaire 23, lorsque la préforme 200 est reçue dans l'entrefer 19, que l'organe de chauffage 22 chauffe la préforme 200 à la deuxième température et que l'organe d'injection 22 injecte du fluide sous pression dans le ou les canaux primaires 21 jusqu'à la première chambre 26 dudit canal secondaire 23. La cuisson de la préforme 200 se déroule ainsi dans des conditions contrôlées de température et de pression, permettant d'obtenir une pièce de turbomachine de hautes performances mécaniques. La compression exercée sur la résine dans la deuxième chambre 27 du canal secondaire 23 par le ou chacun des pistons 24 est par exemple maintenue pendant la cuisson. En variante, elle est modifiée pour et/ou en cours de cuisson.

L'organe de chauffage 20 est par exemple conçu pour chauffer la préforme 200 par l'intermédiaire des premier et deuxième corps 11, 12 du moule de cuisson 10, lorsque la préforme 200 est reçue dans l'entrefer 19 (figure 2). L'organe de chauffage 22 comprend par exemple une presse telle que décrite ci-dessous, un système de chauffage par fluide caloporteur, tel que de l'huile, ou encore une ou plusieurs cartouches chauffantes intégrées aux premier et deuxième corps 11, 12.

Le fluide injecté dans le ou les canaux primaires 21 comprend par exemple de l'air, de l'huile, etc.

L'organe d'injection 22 comprend par exemple un compresseur 28 conçu pour mettre sous pression le fluide à injecter dans le ou les canaux primaires 21 et une conduite d'injection 29 en communication d'une part avec le compresseur 28, et d'autre part avec le ou les canaux primaires 21.

La deuxième chambre 27 du ou de chacun des canaux secondaires 23 communique par exemple avec l'entrefer 19 par l'intermédiaire d'une buse 30 présentant une section transversale, prise perpendiculairement à l'axe de coulissement 25, inférieure à celle de ladite deuxième chambre 27. De cette manière, après cuisson de la préforme 200, la résine cuite dans la deuxième chambre 27 du ou de chacun des canaux secondaires 23 forme une carotte qui se casse facilement lors du démoulage.

L'axe de coulissement 25 du piston 24 du ou de chacun des canaux secondaires 23 est par exemple confondu avec la direction d'empilement DE d'une portion de la préforme 200 située en regard dudit canal secondaire 23.

Le moule de cuisson 10 peut encore comprendre une presse 31 conçue pour comprimer les premier et deuxième corps 11, 12 l'un contre l'autre suivant la direction de serrage DS, lorsque les premier et deuxième corps 11, 12 sont rapportés l'un sur l'autre (figure 2). La presse 31 permet ainsi d'assurer le serrage des premier et deuxième corps 11, 12 du moule de cuisson 10 l'un contre l'autre, et de vaincre le foisonnement de la préforme 200. La presse 30 permet aussi d'assurer le contact des zones périphériques 15, 16 des surfaces interne 13, 14 des premier et deuxième corps 11, 12 du moule de cuisson 10, et ainsi d'éviter les fuites de résine.

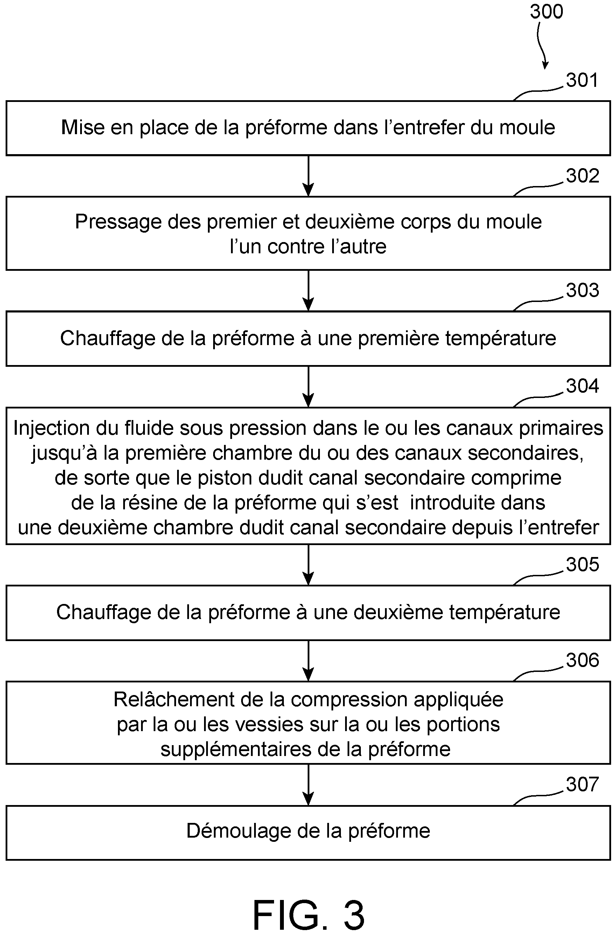

La figure 3 montre un procédé de fabrication 300 de fabrication d'une pièce de turbomachine en matériau composite au moyen du moule de cuisson 10. Le procédé de fabrication 300 comprend les étapes de :
- mise en place 301 de la préforme 200 dans l'entrefer 19, entre les premier et deuxième corps 11, 12 du moule de cuisson 10 ;
- le cas échéant, pressage 302 des premier et deuxième corps 11, 12 du moule de cuisson 10 l'un contre l'autre suivant la direction de serrage DS ;
- chauffage 303 de la préforme 200 à la première température, de la résine provenant de la préforme 200 s'introduisant dans la deuxième chambre 27 de la ou des canaux secondaires 23 ;
- injection 304 du fluide sous pression dans le ou dans chacun des canaux primaires 21 jusqu'à la première chambre 26 du ou de chacun des canaux secondaires 23, de sorte que le piston 24 du ou de chacun des canaux secondaires 23 comprime de la résine qui s'est introduit dans la deuxième chambre 27 dudit canal secondaire 23 depuis la préforme 200 dans l'entrefer 19, la préforme 200 étant maintenue à la première température. La préforme 200 est ainsi mise sous pression hydrostatique. Cette pression hydrostatique est par exemple comprise entre 3 et 10 bar inclus, de préférence entre 3 et 7 bar inclus.

Le procédé de fabrication 300 peut encore comprendre les étapes ultérieures de :
- chauffage 305 de la préforme 200 à la deuxième température, de sorte à cuire la préforme 200, la compression appliquée par le ou chacun des pistons 24 dans le ou les canaux secondaires 23 sur la résine s'étant introduit dans la deuxième chambre 27 dudit canal secondaire 23 étant poursuivie, la résine cuite dans la ou chacune des deuxièmes chambres 27 dudit canal secondaire 23 formant une carotte ;
- le cas échéant, relâchement 306 de la compression appliquée par le ou chacun des pistons 24 dans le ou les canaux secondaires 23 sur la résine qui s'est introduit dans la deuxième chambre 27 dudit canal secondaire 23 ;
- démoulage 307 de la préforme 200 ainsi cuite, la ou les carottes de résine cuite dans la deuxième chambre 27 du ou des canaux secondaires 23 étant cassées, de sorte à obtenir la pièce de turbomachine.

L'étape de relâchement 306 intervient par exemple dès le gel de la résine de la préforme 200 dans le moule de cuisson 10.

Une étape de finition est par exemple encore prévue pour retirer les restes de carottes de résine sur la préforme 200 cuite, notamment pour lisser les zones où les carottes de résine ont été cassées lors du démoulage 307.

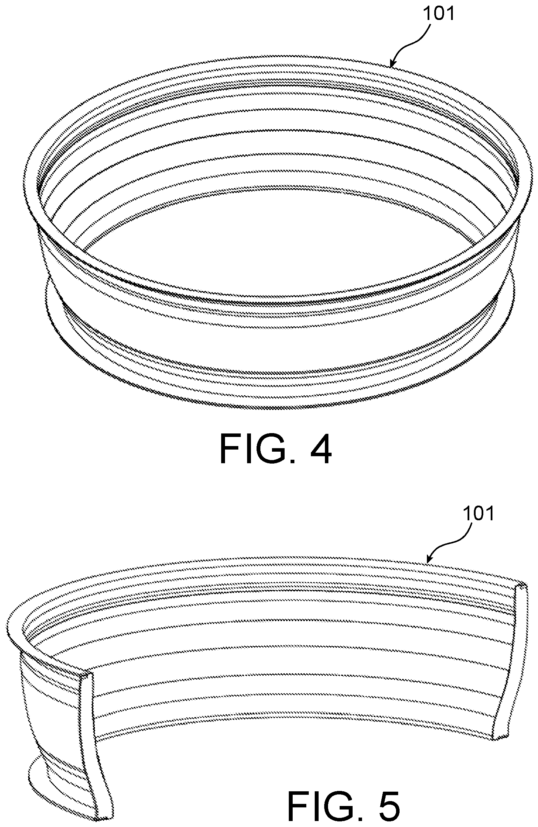

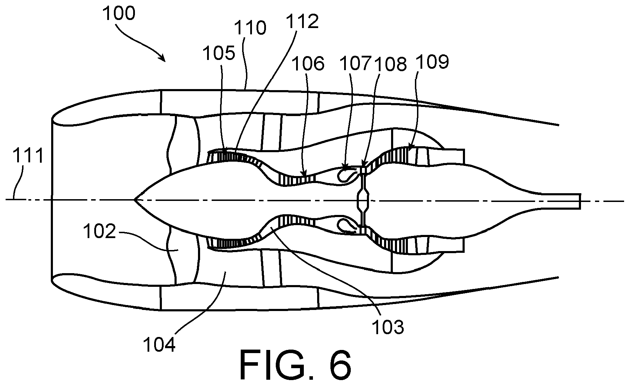

Les figures 4 et 5 montrent chacune un exemple de pièce de turbomachine 101 en matériau composite obtenue par la mise en oeuvre du procédé de fabrication 300. La figure 6 montre une turbomachine 100 pour aéronef comprenant la pièce de turbomachine 101.

La turbomachine 100 est à double flux. Elle comprend une soufflante 102 destinée à l'aspiration d'un flux d'air se divisant en aval de la soufflante 102 en un flux primaire circulant dans un canal d'écoulement de flux primaire, appelé veine primaire 103, au sein d'un coeur de la turbomachine 100, et un flux secondaire contournant ce coeur dans un canal d'écoulement de flux secondaire, appelé veine secondaire 104.

Le coeur de la turbomachine 100 comporte, d'amont en aval dans le sens d'écoulement de l'air, un compresseur basse pression 105, aussi appelé « booster », un compresseur haute pression 106, une chambre de combustion 107, une turbine haute pression 108 et une turbine basse pression 109.

Des rotors respectifs du compresseur haute pression 106 et de la turbine haute pression 108 sont reliés par un arbre dit « arbre haute pression », tandis que des rotors respectifs du compresseur basse pression 105 et de la turbine basse pression 109 sont reliés par un arbre dit « arbre basse pression » entouré par l'arbre haute pression.

La turbomachine 100 est carénée par une nacelle 110 entourant la veine secondaire 104.

Par ailleurs, les rotors de la turbomachine 100 sont montés rotatifs autour d'une direction longitudinale 111 de la turbomachine 100.

Le compresseur basse pression 105 comprend, en plus d'un ou plusieurs rotors, un ou plusieurs stators agencés en alternance avec les rotors suivant la direction longitudinale 111.

Les stators comprennent des aubes s'étendant radialement par rapport à la direction longitudinale 111 entre une virole interne et une virole externe (non représentées) par l'intermédiaire de laquelle lesdites aubes sont portées par un carter externe 112.

La pièce de turbomachine 101 forme par exemple le carter externe 112 du compresseur basse pression 105 (figure 4). La pièce de turbomachine 101 peut aussi former un secteur du carter externe 112 du compresseur basse pression 105 (figure 5). Il est entendu par « secteur », un secteur angulaire du carter externe autour de la direction longitudinale 111. En variante (non représentée), la pièce de turbomachine 101 forme un tambour de rotor.

## Revendications

1. Moule de cuisson (10) pour fabriquer une pièce de turbomachine en matériau composite, à partir d'une préforme (200) réalisée par drapage de pré-imprégnés comprenant des fibres de renfort imprégnés dans une résine thermodurcissable, le moule de cuisson (10) comprenant :
- un premier corps (11) et un deuxième corps (12) conçus pour être rapportés l'un sur l'autre, le premier et le deuxième corps (11, 12) comprenant chacun une surface interne (13, 14) comprenant elle-même une zone périphérique (15, 16) au niveau de laquelle le premier et le deuxième corps (11, 12) sont en contact l'un avec l'autre et une zone centrale (17, 18) définissant un entrefer (19) fixe entre les premier et deuxième corps (11, 12), l'entrefer (19) étant de forme complémentaire avec la pièce de turbomachine à fabriquer et destiné à recevoir la préforme (200) ;
- un organe de chauffage (20) conçu pour chauffer la préforme (200) dans l'entrefer (19) à une première température, de sorte à diminuer la viscosité de la résine ;
- au moins un canal primaire (21) ménagé dans le premier et/ou le deuxième corps (11, 12) ;
- un organe d'injection (22) d'un fluide conçu pour injecter du fluide sous pression dans le ou les canaux primaires (21) ;
- au moins un canal secondaire (22) ménagé dans le premier et/ou le deuxième corps (11, 12), le ou chacun des canaux secondaires (22) recevant un piston (24) monté coulissant à l'intérieur dudit canal secondaire (22) suivant un axe de coulissement (25) et délimitant d'une part une première chambre (26) en communication avec le ou un canal primaire (21), et d'autre part une deuxième chambre (27) en communication avec l'entrefer (19), le piston (24) du ou de chacun des canaux secondaires (22) étant en outre conçu pour comprimer de la résine qui s'est introduit dans la deuxième chambre (27) dudit canal secondaire (22) depuis la préforme (200) dans l'entrefer (19), de sorte à mettre la préforme (200) sous pression hydrostatique, lorsque la préforme (200) est reçue dans l'entrefer (19), que l'organe de chauffage (20) chauffe la préforme (200) à la première température et que l'organe d'injection (22) injecte du fluide sous pression dans le ou les canaux primaires (21) jusqu'à la première chambre (26) dudit canal secondaire (23).

2. Moule de cuisson (10) selon la revendication 1, dans lequel :
- l'organe de chauffage (20) est conçu pour chauffer la préforme (200) à une deuxième température, strictement supérieure à la première température, de sorte à cuire la préforme (200), lorsque ladite préforme (200) est reçue dans l'entrefer (19) ;
- le piston (24) du ou de chacun des canaux secondaires (23) est conçu pour poursuivre la compression exercée sur la résine dans la deuxième chambre (26) dudit canal secondaire (23), lorsque la préforme (200) est reçue dans l'entrefer (19), que l'organe de chauffage (20) chauffe la préforme (200) à la deuxième température et que l'organe d'injection (22) injecte du fluide sous pression dans le ou les canaux primaires (21) jusqu'à la première chambre (26) dudit canal secondaire (23).

3. Moule de cuisson (10) selon la revendication 1 ou la revendication 2, dans lequel la deuxième chambre (27) du ou de chacun des canaux secondaires (23) communique avec l'entrefer (19) par l'intermédiaire d'une buse (30) présentant une section transversale, prise perpendiculairement à l'axe de coulissement (25) du piston (24) dudit canal secondaire (23), inférieure à celle de ladite deuxième chambre (27).

4. Moule de cuisson (10) selon l'une des revendications 1 à 3, dans lequel :
- les fibres de renfort de la préforme (200) sont orientés perpendiculairement par rapport à une direction d'empilement (DE) ;
- l'axe de coulissement (25) du piston (24) du ou de chacun des canaux secondaires (23) est confondu avec la direction d'empilement (DE) d'une portion de la préforme (202) située en regard dudit canal secondaire (23).

5. Procédé de fabrication (300) d'une pièce de turbomachine en matériau composite, au moyen du moule de cuisson (10) selon l'une des revendications 1 à 4, à partir d'une préforme (200) réalisée par drapage de pré-imprégnés comprenant des fibres de renfort imprégnés dans une résine thermodurcissable, le procédé de fabrication (300) comprenant les étapes de :
- mise en place (301) de la préforme (200) dans l'entrefer (19), entre les premier et deuxième corps (11, 12) du moule de cuisson (10) ;
- chauffage (303) de la préforme (200) à la première température, de la résine provenant de la préforme (200) s'introduisant dans la deuxième chambre (27) de la ou des canaux secondaires (23) ;
- injection (304) du fluide sous pression dans le ou dans chacun des canaux primaires (21) jusqu'à la première chambre (26) du ou de chacun des canaux secondaires (23), de sorte que le piston (24) du ou de chacun des canaux secondaires (23) comprime de la résine s'étant introduit dans la deuxième chambre (27) dudit canal secondaire (23) depuis la préforme (200) dans l'entrefer (19), la préforme (200) étant maintenue à la première température.

6. Procédé de fabrication (300) selon la revendication 5, comprenant en outre une étape ultérieure de chauffage (305) de la préforme (200) à une deuxième température, strictement supérieure à la première température, de sorte à cuire la préforme (200), la compression appliquée par le ou chacun des pistons (24) dans le ou les canaux secondaires (23) sur la résine dans la deuxième chambre (27) dudit canal secondaire (23) étant poursuivie, la résine cuite dans la ou chacune des deuxièmes chambres (27) formant une carotte.

7. Procédé de fabrication (300) selon la revendication 6, comprenant en outre une étape ultérieure de démoulage (307) de la préforme (200) ainsi cuite, la ou les carottes de résine cuite dans la deuxième chambre (27) du ou des canaux secondaires (23) étant cassées, de sorte à obtenir la pièce de turbomachine.

8. Procédé de fabrication (300) selon l'une des revendications 5 à 7, dans lequel la préforme est mise sous une pression hydrostatique comprise entre 3 et 10 bar inclus, lors de l'étape d'injection du fluide sous pression dans le ou dans chacun des canaux primaires.

9. Procédé de fabrication (300) selon l'une des revendications 5 à 8, dans lequel la préforme est mise sous une pression hydrostatique comprise entre 3 et 7 bar inclus, lors de l'étape d'injection du fluide sous pression dans le ou dans chacun des canaux primaires.

## Patentansprüche

1. Aushärtform (10) zur Herstellung einer Turbomaschinenkomponente aus Verbundstoffmaterial aus einer durch Überziehen von Prepregs hergestellten Vorform (200) mit Verstärkungsfasern die in einem wärmehärtbaren Harz imprägniert sind, wobei die Aushärtform (10) Folgendes aufweist:
- einen ersten Teil (11) und einen zweiten Teil (12), die bezüglich zueinander ausgelegt sind, wobei der erste und der zweite Teil (11, 12) jeweils eine Innenfläche (13, 14) aufweisen, die wiederum einen Randbereich (15, 16), an dem der erste und der zweite Teil (11, 12) miteinander in Kontakt stehen, und einen mittigen Bereich (17, 18) aufweisen, der einen feststehenden Spalt (19) zwischen dem ersten und dem zweiten Teil (11, 12) definiert, wobei der Spalt (19) eine komplementäre Form zu der herzustellenden Turbomaschinenkomponente aufweist und zum Aufnehmen der Vorform (200) vorgesehen ist;
- einen Heizkörper (20) zum Erhitzen der Vorform (200) in dem Spalt (19) auf eine erste Temperatur, um die Viskosität des Harzes zu verringern;
- mindestens einen Hauptkanal (21), der in dem ersten und/oder dem zweiten Teil (11, 12) verläuft;
- eine Einspritzvorrichtung (22) für eine Flüssigkeit, die zum Einspritzen der Flüssigkeit unter Druck in den Hauptkanal oder die Hauptkanäle (21) vorgesehen ist;
- mindestens einen Nebenkanal (22), der in dem ersten und/oder dem zweiten Teil (11, 12) verläuft, wobei der oder jeder der Nebenkanäle (22) einen Kolben (24) aufnimmt, der gleitend im Inneren des Nebenkanals (22) entlang einer Gleitachse (25) angebracht ist und einerseits eine erste Kammer (26) in Verbindung mit dem oder einem Hauptkanal (21) und andererseits eine zweite Kammer (27) in Verbindung mit dem Spalt (19) begrenzt, wobei der Kolben (24) des Nebenkanals oder jedes der zweiten Nebenkanäle (22) außerdem so ausgeführt ist, dass er Harz komprimiert, das von der Vorform (200) in dem Spalt (19) in die zweite Kammer (27) des Nebenkanals (22) gelangt, um die Vorform (200) mit hydrostatischem Druck zu beaufschlagen, wenn die Vorform (200) in dem Spalt (19) aufgenommen wird, damit das Heizelement (20) die Vorform (200) auf die erste Temperatur erhitzt und damit das Einspritzelement (22) Flüssigkeit unter Druck in den Hauptkanal oder die Hauptkanäle (21) bis zur ersten Kammer (26) des Nebenkanals (23) einspritzt.

2. Aushärtform (10) nach Anspruch 1, wobei:
- das Heizelement (20) zum Erhitzen der Vorform (200) auf eine zweite Temperatur ausgelegt ist, die deutlich höher als die erste Temperatur ist, um die Vorform (200) auszuhärten, wenn die Vorform (200) in dem Spalt (19) aufgenommen ist;
- der Kolben (24) des Nebenkanals oder jedes der Nebenkanäle (23) dazu ausgelegt ist, den auf das Harz in der zweiten Kammer (26) des Nebenkanals (23) aufgebrachten Druck weiter fortzusetzen, wenn die Vorform (200) in dem Spalt (19) aufgenommen ist, damit das Heizelement (20) die Vorform (200) auf die zweite Temperatur erhitzt und damit das Einspritzelement (22) Flüssigkeit unter Druck in den Hauptkanal oder die Hauptkanäle (21) bis zur ersten Kammer (26) des Nebenkanals (23) einspritzt.

3. Aushärtform (10) nach Anspruch 1 oder Anspruch 2, wobei die zweite Kammer (27) des Nebenkanals oder jedes der Nebenkanäle (23) mit dem Spalt (19) über eine Düse (30) in Verbindung steht, die einen Querschnitt senkrecht zur Gleitachse (25) des Kolbens (24) des Nebenkanals (23) aufweist, der kleiner als der der zweiten Kammer (27) ist.

4. Aushärtform (10) nach einem der Ansprüche 1 bis 3, wobei:
- die Verstärkungsfasern der Vorform (200) senkrecht bezüglich einer Stapelrichtung (DE) ausgerichtet sind;
- die Gleitachse (25) des Kolbens (24) des Nebenkanals oder jedes der Nebenkanäle (23) mit der Stapelrichtung (DE) eines dem Nebenkanal (23) gegenüberliegenden Abschnitts der Vorform (202) zusammenfällt.

5. Herstellungsverfahren (300) einer Turbomaschinenkomponente aus Verbundstoffmaterial mit Hilfe der Aushärtform (10) nach einem der Ansprüche 1 bis 4, aus einer Vorform (200), die durch Überziehen von Prepregs mit in einem wärmehärtbaren Harz imprägnierten Verstärkungsfasern hergestellt ist, wobei das Herstellungsverfahren (300) die folgenden Schritte aufweist:
- Einsetzen (301) der Vorform (200) in den Spalt (19) zwischen den ersten und den zweiten Teil (11, 12) der Aushärtform (10);
- Erhitzen (303) der Vorform (200) auf die erste Temperatur, wobei aus der Vorform (200) kommendes Harz in die zweite Kammer (27) des Nebenkanals oder der Nebenkanäle (23) gelangt;
- Einspritzen (304) von Flüssigkeit unter Druck in den Hauptkanal oder jeden der Hauptkanäle (21) bis zur ersten Kammer (26) des Nebenkanals oder jedes der Nebenkanäle (23) derart, dass der Kolben (24) des Nebenkanals oder jedes der Nebenkanäle (23) Harz komprimiert, das aus der Vorform (200) in dem Spalt (19) in die zweite Kammer (27) des Nebenkanals (23) gelangt, wobei die Vorform (200) auf der ersten Temperatur gehalten wird.

6. Herstellungsverfahren (300) nach Anspruch 5, außerdem mit einem weiteren Schritt des Erhitzens (305) der Vorform (200) auf eine zweite Temperatur, die deutlich höher als die erste Temperatur ist, um die Vorform (200) auszuhärten, wobei der durch den oder jeden der Kolben (24) in dem Nebenkanal oder den Nebenkanälen (23) auf das Harz in der zweiten Kammer (27) des Nebenkanals (23) aufgebrachte Druck weiter fortgesetzt wird, wobei das in der oder jeder der zweiten Kammern (27) ausgehärtete Harz einen Anguss bildet.

7. Herstellungsverfahren (300) nach Anspruch 6, außerdem mit einem weiteren Schritt des Entformens (307) der so ausgehärteten Vorform (200), wobei der oder die Angüsse aus in der zweiten Kammer (27) des Nebenkanals oder der Nebenkanäle (23) ausgehärtetem Harz gebrochen werden, um die Turbomaschinenkomponente zu erhalten.

8. Herstellungsverfahren (300) nach einem der Ansprüche 5 bis 7, wobei die Vorform beim Schritt des Einspritzens von Flüssigkeit unter Druck in den Hauptkanal oder in jeden der Hauptkanäle mit einem hydrostatischen Druck von 3 bis einschließlich 10 Bar beaufschlagt wird.

9. Herstellungsverfahren (300) nach einem der Ansprüche 5 bis 8, wobei die Vorform beim Schritt des Einspritzens von Flüssigkeit unter Druck in den Hauptkanal oder in jeden der Hauptkanäle mit einem hydrostatischen Druck von 3 bis einschließlich 7 Bar beaufschlagt wird.

## Claims

1. Curing mold (10) for manufacturing a turbomachine component from a composite material, starting from a preform (200) made by laying up prepregs comprising reinforcing fibers impregnated in a thermosetting resin, the curing mold (10) comprising:
- a first body (11) and a second body (12) designed to be fitted together, the first and second bodies (11, 12) each comprising an internal surface (13, 14) itself comprising a peripheral area (15, 16) at which the first and second bodies (11, 12) are in contact with each other and a central area (17, 18) defining a fixed air gap (19) between the first and second bodies (11, 12), the shape of the air gap (19) being complementary to the turbomachine component to be manufactured and intended to accommodate the preform (200);
- a heating member (20) designed to heat the preform (200) in the air gap (19) to a first temperature, so as to reduce the viscosity of the resin;
- at least one primary channel (21) formed in the first and/or second body (11, 12);
- an injection member (22) designed to inject fluid under pressure into the primary channel(s) (21);
- at least one secondary channel (22) formed in the first and/or second body (11, 12), the or each secondary channel (22) receiving a piston (24) installed free to slide inside said secondary channel (22) along a sliding axis (25) and delimiting, on the one hand, a first chamber (26) in communication with the or a primary channel(s) (21), and on the other hand, a second chamber (27) in communication with the air gap (19), the piston (24) of the or each secondary channel (22) being also designed to compress resin that entered the second chamber (27) of said secondary channel (22) from the preform (200) into the air gap (19), so as to put the preform (200) under hydrostatic pressure when the preform (200) is located in the air gap (19), when the heating member (20) heats the preform (200) to the first temperature and when the injection member (22) injects fluid under pressure into the primary channel(s) (21) to the first chamber (26) of said secondary channel (23).

2. Curing mold (10) according to claim 1, wherein:
- the heating member (20) is also designed to heat the preform (200) to a second temperature, higher than the first temperature, so as to cure the preform (200), when said preform (200) is located in the air gap (19);
- the piston 24 of the or each of the secondary channels 23 is designed to maintain the compression applied on the resin in the second chamber (26) of said secondary channel (23), when the preform (200) is located in the air gap (19), when the heating member (22) heats the preform (200) to the second temperature and when the injection member (22) injects fluid under pressure into the primary channel(s) (21) as far as the first chamber (26) of said secondary channel (23).

3. Curing mold (10) according to claim 1 or claim 2, wherein the second chamber (27) of the or each secondary channel (23) communicates with the air gap (19) through a nozzle (30) with a cross-section perpendicular to the sliding axis (25) of the piston (24) of said secondary channel (23), smaller than that of said second chamber (27).

4. Curing mold (10) according to one of claims 1 to 3, wherein:
- the reinforcing fibers of the preform (200) are oriented perpendicular to a stacking direction (DE);
- the sliding axis (25) of the piston 24 of the or each secondary channel (23) is coincident with the stacking direction DE of a portion of the preform (200) facing said secondary channel 23.

5. Method (300) for manufacturing a turbomachine component made of composite material, making use of the curing mold (10) according to one of claims 1 to 4, starting from a preform (200) made by laying up prepregs comprising reinforcing fibers impregnated in a thermosetting resin, the manufacturing method (300) comprising the following steps:
- place (301) the preform (200) in the air gap (19), between the first and second bodies (11, 12) of the curing mold (10);
- heat (303) the preform (200) to the first temperature, with resin from the preform (200) entering the second chamber (27) of the secondary channel(s) (23);
- inject (304) fluid under pressure into the or each primary channel (21) as far as the first chamber (26) of the or each secondary channel (23), so that the piston (24) of the or each secondary channel (23) compresses the resin that entered the second chamber (27) of said secondary channel (23) from the preform (200) into the air gap (19), the preform (200) being kept at the first temperature.

6. Manufacturing method (300) according to claim 5, also comprising a subsequent step to heat (305) the preform (200) to a second temperature, higher than the first temperature, so as to cure the preform (200), the compression applied by the or each piston (24) in the secondary channel(s) (23) on the resin in the second chamber (27) of said secondary channel (23) being maintained, the resin cured in the or each second chamber (27) forming sprue.

7. Manufacturing method (300) according to claim 6, also comprising a subsequent step to demould (307) the preform (200) thus cured, the sprue of cured resin in the second chamber (27) of the secondary channel(s) 23) being broken, so as to obtain the turbomachine component.

8. Manufacturing method (300) according to one of claims 5 to 7, wherein the preform (200) is put under a hydrostatic pressure between 3 and 10 bar inclusive, during the step to inject pressurized fluid into the or each primary channel.

9. Manufacturing method (300) according to one of claims 5 to 8, wherein the preform (200) is put under a hydrostatic pressure between 3 and 7 bar inclusive, during the step to inject pressurized fluid into the or each primary channel.
